# EUROPÄISCHE PATENTSCHRIFT

(11) **EP 2 147 354 B1**
(45) Veröffentlichungstag und Bekanntmachung des Hinweises auf die Patenterteilung: **07.06.2017**
(21) Anmeldenummer: 08715487.8
(22) Anmeldetag: 13.02.2008
(51) Int. Cl.: G03H 1/04, G03H 1/20, G03H 1/28, B42D 25/328

(54) **VERFAHREN ZUR HERSTELLUNG VON PERSONAL- ODER WERTDOKUMENTEN MIT EINEM PERSONALISIERTEN HOLOGRAMM UND DAMIT HERGESTELLTES PERSONAL- ODER WERTDOKUMENT**
METHOD OF MANUFACTURING PERSONAL OR VALUABLE DOCUMENTS WITH A PERSONALIZED HOLOGRAM AND PERSONAL OR VALUABLE DOCUMENT MANUFACTURED THEREBY
PROCÉDÉ DE FABRICATION DE DOCUMENTS PERSONNELS OU DE VALEUR AVEC UN HOLOGRAMME PERSONNALISÉ, ET DOCUMENT PERSONNEL OU DE VALEUR FABRIQUÉ AINSI

(30) Priorität: 25.04.2007 DE 102007019837
(43) Veröffentlichungstag der Anmeldung: 27.01.2010
(73) Patentinhaber: Hologram Industries Research GmbH, 85652 Pliening-Ottersberg (DE)
(72) Erfinder: MENZ, Irina, 85630 Grasbrunn (DE); DAUSMANN, Günther, 85630 Grasbrunn (DE)
(74) Vertreter: Farago, Peter Andreas
(86) Internationale Anmeldenummer: PCT/DE2008/000261
(87) Internationale Veröffentlichungsnummer: WO 2008/131710

(56) Entgegenhaltungen:
- EP-A- 0 701 183
- WO-A-02/070275
- WO-A2-03/082598
- US-A- 4 913 990
- US-A- 5 856 048

## Beschreibung

Die Erfindung bezieht sich auf ein Verfahren zur Herstellung von Personal-oder Wertdokumenten mit erhöhter Fälschungssicherheit sowie ein Personal-oder Wertdokument, hergestellt durch dieses Verfahren, gemäß Oberbegriff der Ansprüche 1 und 12.

Es ist bekannt, dass Volumenhologramm-Overlays mit individualisierten Personaldaten für den Fälschungsschutz von Personaldokumenten eingesetzt werden (EP 0896260 A2). Die Personaldaten wie z. B. ein Photo des Dokumenteninhabers, sind dabei separat neben anderen optischen Informationen angeordnet, wie beispielsweise ein dreidimensionales Objekt und andere schwer nachzumachende holographische optische Elemente. Die nebeneinander angeordneten Informationen sind nicht optimal miteinander verknüpft, um eine unerlaubte Kopie einzelner holographischer Elemente sowie Manipulation der Personendaten zu verhindern.

In der EP 0701 183 A2 ist ein Mehrlagenmaster beschrieben, auf den ein holografisches Aufnahmematerial laminiert ist. Die Kopie erfolgt mit mindestens zwei Laserstrahlen, die in unterschiedlichen Winkeln auf den Master fallen, incoherent zueinander sind oder unterschiedliche Polarisationsrichtungen haben, damit alle Informationen ungestört rekonstruiert werden können. Die Laserstrahlen können auch unterschiedliche Wellenlängen haben. Der Master besteht hier aus mehreren Volumenhologrammschichten mit unterschiedlich ausgerichteten Bragg-Ebenen (Reflexionsvolumenhologramme oder/ und Trans-missionsvolumenhologramme).

Somit ist bekannt, dass überlappende, unterschiedlich farbige, holographische Standardinformationen mittels mehrerer Laserstrahlen unterschiedlicher Wellenlänge von einem Master kopiert werden können. Für eine massenweise kontinuierliche Kontaktkopieproduktion solcher Hologramme, beispielsweise über einen Mastertrommelreplikator, wäre aber eine komplizierte, kontinuierlich, dynamisch sich ändernde Lenkung der Laserstrahlen sowie deren abgestimmte Dosierung notwendig.

Aus der WO 03/082598 A2 eine Sicherheitseinrichtung, ein sogenanntes Sicherheitsetikett oder DOVID (Diffractive Optical Variable Identification Device) bekannt, bei dem sich die holographischen Schichten auf einer Sicherheits- oder Trägerfolie aufgebracht befinden, über welche sie auf eine Ware oder ein Dokument mit Hilfe eines druck- oder wäreempfindlichen Klebstoffes fest so aufgeklebt werden können, daß beim Versuch, das Etikett zu entfernen, das Hologramm zerstört wird.

In der US 5,856,048 geht es um Hologramme zum Fälschungsschutz von Karten, etc., die mittels Colortuning, also Auflaminieren eines schwellenden Filmes, oder Aufdrucken einer Information mittels schwellender Druckfarbe, individualisiert werden, wobei Zahlen, Buchstaben und Mustereingebracht werden.

In der US 4,913,990 A wird ein flüssiges lösungsmittelhaltiges Schwellmedium (mit Lösungsmittel verdünnt) vorgeschlagen, das ganzflächig auf das Hologramm aufgetragen wird, wodurch das Hologramm ganzflächig schwillt. Je nach Einwirkdauer wird dadurch ein bestimmter Farbeffekt ganzflächig erzielt. Das UV-gehärtete Schwellmedium kann auch die Oberfläche des Hologrammes gegen Verkratzen schützen. Ein Schwellen nur in Teilbereichen der Hologrammfläche und somit die Möglichkeit des Einbringens zusätzlicher individueller Information in das Hologramm ist nicht entnehmbar.

Schließlich wird in der WO 02/070275 A2 ein Verfahren zur Serien-Herstellung von durch personifizierte Hologramme gesicherten Dokumenten beschrieben, bei dem in einer Aufzeichnungsstation ein unbelichteter lichtempfindlicher Film durch eine Maske mindestens einem kleinen Rechteck mit Laserlicht belichtet wird, wobei ein mindestens ein holographischer Spiegel, also ein Reflexionsvolumenhologramm (holographisches Gitter) in Form kleiner Rechtecke oder Quadrate erzeugt wird. Der belichtete Film wird UV-fixiert und in einem weiteren Schritt mit einer Folie oder einem Film aus Personalisierungsmaterial, einem speziellem Photopolymer, zusammenlaminiert, wodurch eine Photopolymer-Verbundfolie gebildet wird. In einer nachfolgenden Station erfolgt die Personalisierung der holographischen Spiegel durch UV-Strahlen, indem die aktive Photopolymerschicht teilweise deaktiviert wird, in Form eines Motivs, das eine Information des Identitätsdokuments darstellt. Der aktiv verbliebene Filmteil schwillt die Hologramme der Hologrammfolie in einem vorgegebenen Muster (Colortuning), wonach der Verbund-Film gebacken, mit einer Klebe-Haftschicht versehen, dann ein passendes Hologramm-Rechtecke vom Verbundfilm ausgestanzt und auf ein fertig bedrucktes, ausgestanztes Dokument geklebt/laminiert wird. Da die Laminierung der Verbundfolie kontinuierlich erfolgt, die Personalisierung und insbesondere das Ausschneiden und Aufkleben der Hologramme diskontinuierlich und in unterschiedlichen Stationen erfolgt, gestaltet sich dieses bekannte Verfahren relativ komplex Die Merkmale des Oberbegriffs von Anspruch 1 sind aus diesem Dokument bekannt.

Aufgabe der Erfindung ist es somit, ein Verfahren sowie ein durch dieses Verfahren hergestelltes Personal- und Wertdokument obiger Gattung anzugeben, mit deren Hilfe die Fälschungs- und Manipulationsgefahr von Personal- und Wertdokumenten in einfacher Weise verlässlich minimiert wird, ohne aufwendige Datenlogistik.

Diese Aufgabe wird durch ein erfindungsgemäßes Verfahren nach Anspruch 1 sowie durch ein Personal- und Wertdokument nach Anspruch 12 gelöst.

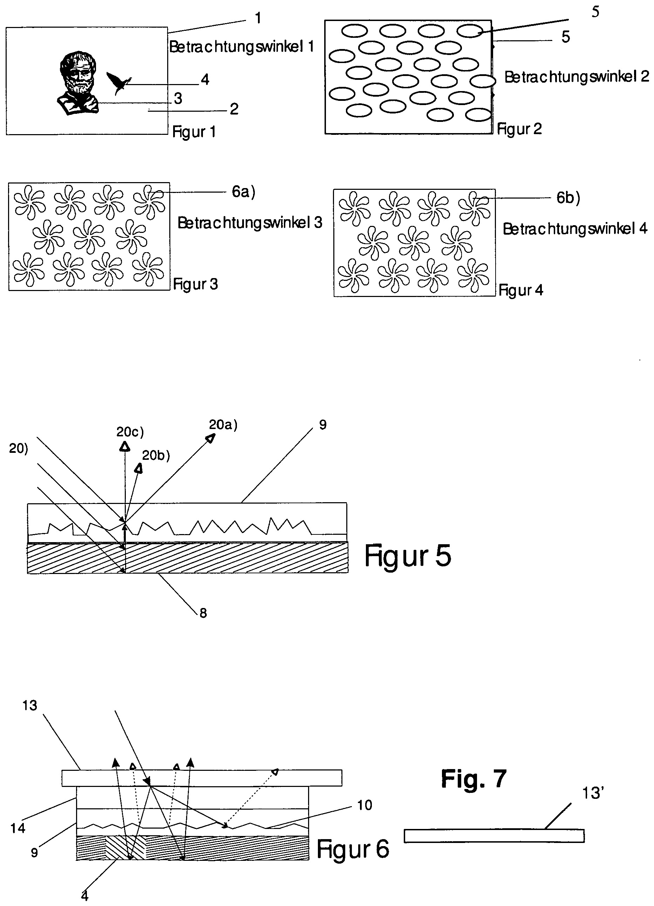

Vorteilhafte Ausgestaltungen der Erfindung ergeben sich aus den jeweils rückbezogenen Unteransprüchen. Die obere, teildurchlässige, Schicht des in dem erfindungsgemäßen Verfahren verwendeten Masters kann eine teildurchlässige Folie 9, vorteilhafter Weise mit einer Folienschichtdicke von wenigen µm sein, die ganzflächig auf die andere (untere) Schicht 8 appliziert ist (Fig. 5). Diese teildurchlässige Folie 9 hat beispielsweise ein holographisches Oberflächenrelief 10, bevorzugt ein holographisches Endlosmuster 5' und weitere optisch variable Elemente 6'. Beispielsweise kann diese Folie eine holographische Prägefolie mit einer hochbrechenden Beschichtung des holographischen Oberflächenreliefs, bevorzugter Weise Zinksulfid, Titanoxid oder teildurchlässiges, semidemetallisiertes Metall, z. B. Aluminium, mit teildemetallisierten Arealen sein. Es kann aber auch ein Film mit volumenholographischen Mustern und anderen optischen Elementen sein. Das Material der hologrammtragenden Masterschicht 8, auf welche die teildurchlässige Folie 9 appliziert ist, kann beispielsweise ein Silberhalogenidfilm oder Photopolymerfilm sein, in dem holographische Elemente, wie beispielsweise ein dreidimensionales Objekt 4', ein großflächiges, homogenes Volumengitter 2' und weitere optische Elemente wie Positionsmarken und andere Marken vorhanden sind. Die hologrammtragende Masterschicht 8 kann aber auch ein Oberflächenhologramm sein, beispielsweise geprägt in eine metallisierte Folie. Infolge der Teildurchlässigkeit der auf die Schicht 8 des Masters 7 applizierten Folie 9 kann erreicht werden, dass die holographischen Elemente 5', 6' der Folie 9 durch mehrfache Reflexion und Beugung des einfallenden Laserlichtes 20, d. h. durch eine erste Reflexion und Beugung 20a an den Reliefstrukturen 10 der teildurchlässigen Folie und zusätzlich durch eine zweite Beugung 20b des am darunterliegenden Hologramm 8 des Masters 7 in einem anderen Winkel reflektierten Lichtes, in den Polymerfilm kopiert werden, während gleichzeitig auch alle holographischen Elemente der unter der teiltransparenten Folie 9 angeordneten Schicht 8 durch Beugung und Reflexion des einfallenden Lichtes 20c in den Polymerfilm kopiert werden können.

Als Ergebnis erhält man eine holographische Kopie im belichteten Photopolymerfilm 13', in dem alle holographischen Standardelemente sich überlappen, aber unter verschiedenen Betrachtungswinkeln separat zu erkennen sind. Die Mehrfachbeugung der Oberflächenreliefelemente 5', 6' während der Laserkopie führt dazu, dass diese Elemente 5, 6a, 6b im belichteten Polymerfilm 13', in Reflexion betrachtet, einen Farb-Flip-Effekt bei Änderung des Betrachtungswinkels zeigen.

Auf die teiltransparente Folie 9 kann zusätzlich ein transparenter Volumenhologrammfilm 14 laminiert werden, dessen holographischen Elemente als Strahlteiler im Transmissionsmodus fungieren und somit den einfallenden Laserkopierstrahl in mehrere Strahlen aufteilen, die in unterschiedlichen Winkeln auf die darunterliegenden Schichten 8, 9 fallen und unterschiedlich zurückgebeugt werden (Fig. 6). Dadurch wird erreicht, dass die in den Photopolymerfilm 13 mit einer Laserlichtwellenlänge kopierten holographischen Elemente 2, 4, 5, 6 der Schichten 8 und 9 in gewünscht unterschiedlichen Farben rekonstruieren, wenn die Bragg-Bedingungen erfüllt sind.

Nach erfolgter Laserkopie wird in üblicher Weise der Film 13' entwickelt, beispielsweise mit UV- Licht fixiert und bei höheren Temperaturen, bevorzugter Weise bei 120°C gebacken.

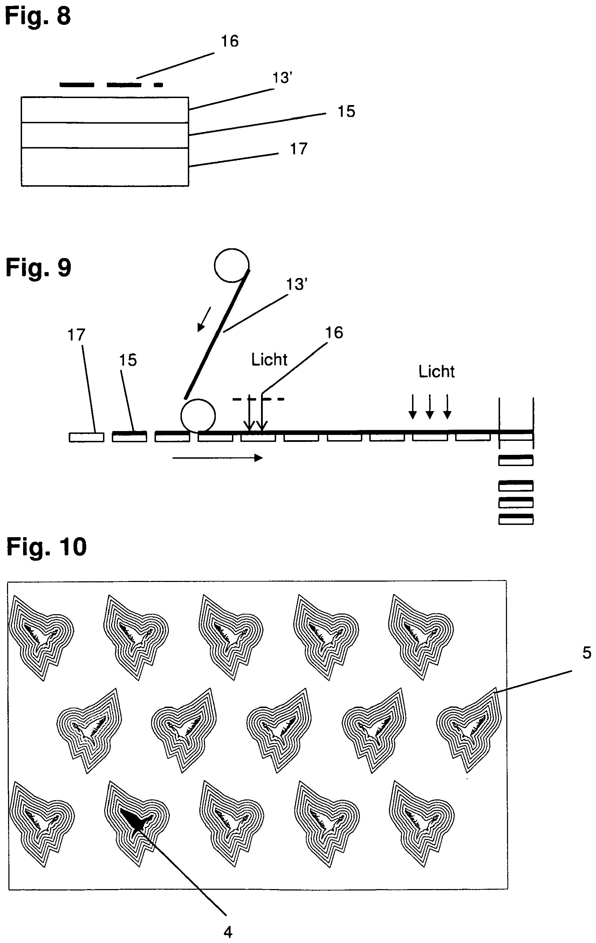

Die holographischen Personaldaten (Passbild 3) werden z.B. während der Applikation des belichteten entwickelten Filmes 13' auf das Personaldokument 17 im applizierten Film 13' erzeugt, indem ein flüssiger, lichthärtender, monomerhaltiger Klebstoff 15 zur Verklebung des Hologrammfilms auf das Dokument aufgetragen wird, der zunächst durch eine personaldatentragende Maske 16 belichtet wird und nach wenigen Sekunden, bevorzugterweise nach 5 - 300 sec, ein zweites Mal ohne Maske vollflächig mit Licht ausgehärtet wird, um seine Klebkraft vollständig zu erreichen (Fig. 8, Fig. 9). Durch die erste Maskenbelichtung wird erreicht, dass nur jene Klebstoffareale ausgehärtet werden, die sich unter den lichtdurchlässigen Maskenarealen befinden, während die unbelichteten Monomere des Klebstoffes Zeit haben, in den Polymerfilm einzudringen und diesen zu schwellen, was sich in einer Farbänderung dieser holographischen Flächen bemerkbar macht. Der Vorteil dieser Individualisierungsmethode besteht darin, dass in der Applikationsstation die auf dem Dokument 17 bereits vorhandenen, beispielsweise gedruckten Personaldaten ausgelesen und diese Daten zur Erzeugung der Maske, beispielsweise einer LCD-Maske 16 oder im Inkjet-Verfahren auf den applizierten Film gedruckte Maske, verwendet werden können, wodurch eine aufwendige Datenlogistik nicht notwendig wird. Gleichzeitig wird der für die dauerhafte Verklebung des Hologramm-Overlays mit dem Personaldokument notwendige Flüssigklebstoff 15 zur holographischen Personalisierung genutzt, d. h. ein Minimum an Materialeinsatz wird erreicht. Ebenso ist es möglich, den noch nicht personalisierten Film 13'zuerst mit dem Personaldokument zu verkleben und in einem späteren Schritt die Individualisierung des applizierten Volumenhologramm-Overlays während der Schutzlackbeschichtung der Hologrammoberfläche, beispielsweise durch Siebdruckauftrag lichtaushärtbarer monomerhaltiger Lacke, in gleicher Weise durchzuführen.

Mit diesem Flüssigtuningverfahren erhält man holographische Personaldaten, insbesondere Passfotos, mit überraschend guter Detailtreue, Helligkeit und Mehrfarbigkeit, ohne dass dafür mehrere Laser unterschiedlicher Wellenlänge notwendig sind. Vorteile der Erfindung sind neben der optischen Verknüpfung aller holographischen Elemente des Volumenhologramm-Overlays 1 und der sich daraus ergebenden höheren Fälschungssicherheit, dass nur ein Laserkopierstrahl zur Erzeugung sich überlappender holographischer Elemente mit unterschiedlicher Farbwiedergabe verwendet wird.

Durch die Verknüpfung der verschiedenen sich überlagernden holographischen Elemente ergeben sich weiterhin Möglichkeiten für neue holographische Bildelemente, die sich durch Kombination der Einzelkomponenten unter bestimmten Betrachtungswinkeln ergeben und zusätzlich eine Fälschung einzelner Elemente erschweren. Beispielsweise kann das dreidimensionale Objekt 4 mit den holographischen Elementen (Pattern) 5, 6 bei genauer Anordnung dieser Elemente im Master zueinander einen sinnvollen Morphing-Effekt (Fig. 10) ergeben.

Eine Verbesserung des holographischen Designs im erfindungsgemäßen Volumenhologramm-Overlay kann ebenfalls erreicht werden, wenn die holographischen Elemente des Masters mit lichtundurchlässigen Flächen oder Konturen kombiniert werden, beispielsweise durch Bedrucken der obersten Masterschicht oder zwischen den einzelnen Masterschichten oder durch Anordnung teiltransparenter Folienteile 9 auf die unteren Masterschichten, wobei. diese Folienteile 9 mit unterschiedlich lichtdurchlässigen hochbrechenden Materialien beschichtet sind.

Ein Vorteil des erfindungsgemäßen Herstellungsverfahrens ist, dass eine aufwendige Datenlogistik für eine Zuordnung der Hologramme zu den jeweiligen personalisierten Dokumenten wird nicht notwendig. Ein Vorteil des erfindungsgemässen Herstellungsverfahrens nach Anspruch 1 ist, dass erst nach der Laserkopie der standardholographischen Elemente (2, 4, 5, 6) vom Master (7) die individuellen Personaldaten (Passfoto 3) erzeugt werden und auf diese Weise erreicht werden kann, dass bei dem auf das Personal- oder Wertdokument gemäß Anspruch 12 applizierten Reflexionsvolumenhologramm die individuellen Informationen separat und vollständig zu erkennen sind und gleichzeitig eine Verknüpfung mit den anderen holographischen Standardelementen erreicht ist.

## Patentansprüche

1. Verfahren zur Herstellung von Personal- oder Wertdokumenten mit erhöhter Fälschungssicherheit, mit einem auf diesen applizierten Reflexionsvolumenhologramm,
- bei dem in einem lichtempfindlichen Material, das als ein Photopolymerfilm (13) ausgebildet ist, durch Laserlicht (20) ein Reflexionsvolumenhologramm erzeugt wird,
- danach der belichtete Film (13) mit UV-Licht fixiert wird,
- wonach der so mit dem Hologramm versehene Film (13') mit einem lichtaushärtenden chemischen Material in Kontakt gebracht wird,
- und danach durch Maskenbelichtung eine Personalisierung des Hologramms erfolgt, in Abhängigkeit von auf dem Dokument vorhandenen Personaldaten, durch Ausnutzung der Colortuningeigenschaften des lichthärtenden chemischen Materials (15),
**dadurch gekennzeichnet,**
- **dass** zur Erzeugung des Reflexionsvolumenhologrammes der unbelichtete Photopolymerfilm (13) auf einen aus mindestens zwei übereinanderliegenden hologrammtragenden Schichten (8, 9) bestehenden Master (7) laminiert wird, wobei mindestens die oberste hologrammtragende Masterschicht (9), auf die der zu belichtende Film laminiert wird, aus einem teiltransparenten Material mit holographischen Elementen besteht, die sich über den holographischen Elementen der unteren Masterschicht oder Masterschichten befinden, und anschließend alle holographischen Elemente (2, 4, 5, 6) des Masters mit Laserlicht (20) in den Film (13) kopiert werden, wobei eine holographische Kopie im belichteten Photopolymerfilm (13') erhalten wird, in dem alle holographischen Elemente separat unter verschiedenen Betrachtungswinkeln zu erkennen sind,
- **dass** nach der Laserkopie der Film (13') in üblicher Weise entwickelt wird, z. B. nach dem Fixieren mit UV-Licht bei höheren Temperaturen, bevorzugterweise bei 120°C, gebacken wird,
- danach der belichtete, entwickelte Film (13') auf das Personal- oder Wertdokument (17') appliziert wird, wobei individuellen holographische Personaldaten (3) während oder nach der Applikation des belichteten Films (13') auf das Personaldokument (17) in dem im applizierten Film (13') gespeicherten Reflexionsvolumenhologramm (1) durch Ausnutzung der Colortuninge-eigenschaften von für die Integration und Applikation des Films (13') mit dem Reflexionsvolumenhologramm (1) auf das Dokument (17) verwendeten lichthärtenden monomerhaltigen Flüssigklebstoffe oder Schutzlacke erzeugt werden.

2. Verfahren nach Anspruch 1, **dadurch gekennzeichnet, dass** die holographischen Personaldaten (3) durch Ausnutzung der Colortuningeigenschaften des für die Verklebung des Reflexionsvolumenhologrammes mit dem Dokument oder mit der Dokumentoberflächenschutzfolie verwendeten lichtaushärtbaren Flüssigklebstoffes (15) erzeugt werden, indem dazu eine optische, entsprechend dem Dokument (17) individuelle Daten (3) tragende Maske (16) verwendet wird, mit Laserlicht (20) belichtet wird, die Maske anschließend entfernt wird und eine weitere ganzflächige Belichtung, bevorzugterweise 5 - 300 sec nach der Maskenbelichtung, zur vollständigen Aushärtung des Klebstoffes zwischen dem Dokument (17) oder der Dokumentenoberflächenschutzfolie und dem Reflexionsvolumenhologramm (1) durchgeführt wird, oder dass die holographischen Personaldaten (3) durch Ausnutzung der Colortuningeigenschaften des zum Oberflächenschutz des auf das Dokument applizierten Reflexionsvolumenhologramms verwendeten lichtaushärtbaren Lackes erzeugt werden.

3. Verfahren nach Anspruch 1, **dadurch gekennzeichnet, dass** die oberste hologrammtragende Masterschicht (9) aus einer teildemetallisier-25 ten Prägehologrammfolie mit holographischen Oberflächenrelief-Elementen (10, 5', 6') besteht, die sich über den volumenholographischen Elementen (2', 4') der unteren Masterschicht oder Masterschichten (8) befinden.

4. Verfahren nach Anspruch 3, **dadurch gekennzeichnet,**
**dass** die teiltransparente oberste Masterschicht (9) eine Prägehologrammfolie mit einer hochbrechenden Beschichtung, vorzugsweise Zinksulfid, ist.

5. Verfahren nach Anspruch 1, **dadurch gekennzeichnet, dass** die oberste hologrammtragende Masterschicht (9) aus mehreren Volumen- und Prägehologrammfolienteilen zusammengesetzt ist, wobei die Prägehologrammfolienteile mit unterschiedlichen hochbrechenden Materialien beschichtet sind.

6. Verfahren nach Anspruch 5, **dadurch gekennzeichnet, dass** mindestens ein Prägehologrammfolienteil der obersten teiltransparenten hologrammtragenden Masterschicht (9) eine teildemetallisierte Prägehologrammfolie ist.

7. Verfahren nach Anspruch 1, **dadurch gekennzeichnet, dass** die holografischen Elemente des Masters (7) mit lichtundurchlässigen Flächen oder Konturen kombiniert werden, wobei die lichtundurchlässigen Flächen beispielsweise durch Bedrucken der obersten Masterschicht oder zwischen den einzelnen hologrammtragenden Masterschichten (8, 9) oder durch Anordnung teiltransparenter Folienteile (9) auf den unteren Masterschichten (8), wobei diese Folienteile (9) mit unterschiedlich lichtundurchlässigen hochbrechenden Materialien beschichtet sind, erzeugt werden.

8. Verfahren nach Anspruch 1, **dadurch gekennzeichnet, dass** mindestens eine der unteren Masterschichten (8) ein Reflexionsvolumenhologramm mit dreidimensionalen Objekten und zweidimensionalen Elementen oder ein Oberflächenhologramm mit dreidimensionalen Objekten und zweidimensionalen Elementen ist.

9. Verfahren nach Anspruch 1, **dadurch gekennzeichnet, dass** die unteren Masterschichten (8) teilweise von der obersten teiltransparenten Masterschicht (9) überdeckt werden.

10. Verfahren nach Anspruch 1, **dadurch gekennzeichnet, dass** die Masteroberfläche mit einer transparenten Schutzschicht versiegelt ist.

11. Verfahren nach einem oder mehreren der voranstehenden Ansprüche, **dadurch gekennzeichnet, dass** die individuellen holographischen Personaldaten (3) aus einem Passfoto bestehen.

12. Personal- oder Wertdokument mit darauf appliziertem Reflexionsvolumenhologramm zur Erhöhung der Fälschungssicherheit, hergestellt nach einem Verfahren nach den Ansprüchen 1 bis 11, wobei das Volumenhologramm aus einer Photopolymerfilmschicht (13') besteht, die auf das Dokument (17) appliziert ist und wobei alle holographischen Informationen (2, 4, 5, 6) der Schicht, einschließlich der während oder nach der Applikation eingebrachten individuellen holographischen Personaldaten, wie beispielsweise ein Passfoto (3), sich einander überlagern und unter verschiedenen Betrachtungswinkeln separat und vollständig und in unterschiedlichen Farben zu erkennen sind.

## Claims

1. Method for the production of personal documents or valuable documents with increased protection against forgery, with a reflection volume hologram applied on these documents,
- with which in a material sensitive to light, which is formed as a photopolymer film (13), a reflection volume hologram is created by laser light (20),
- then the exposed film (13) is fixed with UV-light,
- after which the film (13') thus provided with the hologram is contacted with a light-curable chemical material,
- after which personalization of the hologram takes place by mask exposure, in dependence on the personal data on the document, by exploitation of the color tuning properties of the light-curable chemical material (15),
**characterized in that**
- for creating the reflection volume hologram, the non-exposed photopolymer film (13) is laminated onto a master (7) consisting of at least two overlapping hologram-carrying layers (8, 9), with at least the uppermost hologram-carrying master layer (9) onto which the film to be exposed is laminated consisting of a partially transparent material with holographic elements positioned on top of the holographic elements of the lower master layer(s), and with subsequently all holographic elements (2, 4, 5, 6) of the master being copied into the film (13) with laser light (20), where a holographic copy in the exposed photopolymer film (13') is obtained, in which film all holographic elements can be recognized separately from different viewing angles,
- after laser copying, the film (13') is developed in the usual manner, for instance baked after fixing with UV-light at higher temperatures, preferably at 120°C,
- then the exposed and developed film (13') is applied on the personal or valuable document (17'), with individual holographic personal data (3) being created by light-curable monomer-containing liquid adhesives or protective lacquers used for the integration and application of the film (13') with the reflection volume hologram (1) on the document (17) during or after the application of the exposed film (13') on the personal document (17) in the reflection volume hologram (1) stored in the applied film (13') by exploitation of the color tuning properties.

2. Method according to Claim 1, **characterized in that** the holographic personal data (3) are generated by exploitation of the color tuning properties of the light-curable liquid adhesive (15) used for adhering the reflection volume hologram to the document or to the document surface protective film; by using an optical mask (16) which carries individual data (3) corresponding to the document (17), the mask being exposed to laser light (20), then removed, and then another exposure of the entire surface, preferably 5 - 300 sec after the mask exposure, being performed for complete curing of the adhesive between the document (17) or the document surface protective film and the reflection volume hologram (1), or **in that** the holographic personal data (3) are generated by exploitation of the color tuning properties of the light-curable lacquer used for surface protection of the reflection volume hologram applied on the document.

3. Method according to Claim 1, **characterized in that** the topmost hologram-carrying master layer (9) consists of a partially deplated embossed hologram film with holographic surface relief elements (10, 5', 6') located on top of the volume holographic elements (2', 4') of the lower master layer(s) (8).

4. Method according to Claim 3, **characterized in that** the partially transparent topmost master layer (9) is an embossed hologram film with a highly refractive coating, preferably zinc sulfide.

5. Method according to Claim 1, **characterized in that** the topmost hologram-carrying master layer (9) is composed of several volume and embossed hologram film parts, with the embossed hologram film parts being coated with various highly refractive materials.

6. Method according to Claim 5, **characterized in that** at least one embossed hologram film part of the topmost partially transparent hologram-carrying master layer (9) is a partially deplated embossed hologram film.

7. Method according to Claim 1, **characterized in that** the holographic elements of the master (7) are combined with opaque surfaces or contours, with the opaque surfaces being produced, for instance, by printing of the topmost master layer or between the individual hologram-carrying master layers (8, 9) or by the arrangement of partially transparent film parts (9) on the lower master layers (8), these film parts (9) being coated with highly refractive materials with different opaquenesses.

8. Method according to Claim 1, **characterized in that** at least one of the lower master layers (8) is a reflection volume hologram with three-dimensional objects and two-dimensional elements or a surface hologram with three-dimensional objects and two-dimensional elements.

9. Method according to Claim 1, **characterized in that** the lower master layers (8) are partly covered by the topmost partially transparent master layer (9).

10. Method according to Claim 1, **characterized in that** the master surface is sealed with a transparent protective layer.

11. Method according to one or more of the above Claims, **characterized in that** the individual holographic personal data (3) consist in a passport photograph.

12. Personal document or valuable document with a reflection volume hologram applied thereon for increasing protection against forgery, manufactured with a method according to Claims 1 through 11, the volume hologram consisting of a photopolymer film layer (13') applied on the document (17) and all holographic information (2, 4, 5, 6) of the layer, including the individual holographic personal data introduced during or after the application, such as, for instance, a passport photograph (3), overlap and are separately and fully visible in different colors from different viewing angles.

## Revendications

1. Procédé de production de documents d'identité ou de valeur avec une sécurité anti-falsification accrue comprenant un hologramme à volume réfléchissant appliqué sur ceux-ci,
- dans lequel un hologramme à volume réfléchissant est produit par lumière laser (20) dans un matériau photosensible qui est conçu en tant que film photopolymère (13),
- le film (13) exposé est ensuite fixé par lumière UV,
- après quoi, le film (13') ainsi doté de l'hologramme est mis en contact avec un matériau chimique photodurcissable,
- et ensuite, l'hologramme est personnalisé par exposition d'un masque, en fonction de données d'identité présentes sur le document, par exploitation des propriétés d'ajustement de couleur du matériau chimique photodurcissable (15),
**caractérisé en ce**
- **que** pour produire l'hologramme à volume réfléchissant, le film photopolymère (13) non exposé est laminé sur un maître (7) composé d'au moins deux couches (8, 9) portant l'hologramme reposant l'une sur l'autre, dans lequel au moins la couche maîtresse supérieure (9) portant l'hologramme sur laquelle le film à exposer est laminé, est composée d'un matériau partiellement transparent avec des éléments holographiques qui se trouvent au-dessus des éléments holographiques de la ou des couche(s) inférieure(s), et enfin tous les éléments holographiques (2, 4, 5, 6) du maître sont copiés par lumière laser (20) dans le film (13), dans lequel une copie holographique est obtenue dans le film (13') photopolymère exposé, dans lequel tous les éléments holographiques sont reconnaissables séparément sous différents angles d'observation,
- **qu'**après la copie laser, le film (13') est développé de manière courante, par ex. après la fixation à la lumière UV, est cuit à températures plus élevées, de préférence à 120°C,
- ensuite, le film (13') exposé et développé est appliqué sur le document (17') d'identité ou de valeur, dans lequel des données d'identité (3) holographiques individuelles sont produites pendant ou après l'application du film (13') exposé sur le document d'identité (17) dans l'hologramme à volume réfléchissant (1) stocké dans le film (13') appliqué, par exploitation des propriétés d'ajustement de couleur de colles liquides ou de vernis de protection contenant des monomères photodurcissables employé(e)s pour l'intégration et l'application du film (13') avec l'hologramme à volume réfléchissant (1) sur le document (17).

2. Procédé selon la revendication 1, **caractérisé en ce que** les données d'identité (3) holographiques sont produites par exploitation des propriétés d'ajustement de couleur de la colle liquide (15) photodurcissable employée pour coller l'hologramme à volume réfléchissant avec le document ou avec le film de protection de la surface du document, **en ce que** pour cela, un masque (16) optique portant les données individuelles (3) conformément au document (17) est employé, est exposé à la lumière UV (20), le masque est ensuite enlevé et une exposition supplémentaire sur toute la surface, de préférence 5 - 300 secondes après l'exposition du masque, est effectuée pour le durcissement complet de la colle entre le document (17) ou le film de protection de la surface du document et l'hologramme à volume réfléchissant (1), ou que les données d'identité (3) holographiques sont produites par exploitation des propriétés d'ajustement de couleur du vernis photodurcissable employé pour la protection de surface de l'hologramme à volume réfléchissant appliqué sur le document.

3. Procédé selon la revendication 1, **caractérisé en ce que**
la couche maîtresse supérieure (9) portant l'hologramme est composée d'un film d'hologramme d'empreinte partiellement démétallisé avec des éléments à relief surfacique holographiques (10, 5', 6') qui se trouvent au-dessus des éléments holographiques de volume (2', 4') de la ou des couche(s) maîtresse(s) inférieure(s) (8).

4. Procédé selon la revendication 3, **caractérisé en ce que**
la couche maîtresse supérieure (9) partiellement transparente est un film d'hologramme d'empreinte avec un revêtement à haute réfraction, de préférence du sulfate de zinc.

5. Procédé selon la revendication 1, **caractérisé en ce que**
la couche maîtresse supérieure (9) portant l'hologramme est composée de plusieurs parties de films d'hologramme d'empreinte et à volume, dans lequel les parties de films d'hologramme d'empreinte sont revêtues de différents matériaux à haute réfraction.

6. Procédé selon la revendication 5, **caractérisé en ce qu'**au moins une partie de film d'hologramme d'empreinte de la couche maîtresse supérieure (9) portant l'hologramme partiellement transparente est un film d'hologramme d'empreinte partiellement démétallisé.

7. Procédé selon la revendication 1, **caractérisé en ce que** les éléments holographiques du maître (7) peuvent être combinés à des surfaces ou contours opaques, dans lequel les surfaces opaques sont produites par exemple par impression de la couche maîtresse supérieure ou entre les différentes couches maîtresses (8, 9) portant l'hologramme ou par agencement de parties de film (9) partiellement transparentes sur les couches maîtresses inférieures (8), dans lequel ces parties de film (9) sont revêtues de différents matériaux opaques à haute réfraction.

8. Procédé selon la revendication 1, **caractérisé en ce qu'**au moins une des couches maîtresses inférieures (8) est un hologramme à volume réfléchissant avec des objets tridimensionnels et des éléments bidimensionnels ou un hologramme de surface avec des objets tridimensionnels et des éléments bidimensionnels.

9. Procédé selon la revendication 1, **caractérisé en ce que** les couches maîtresses inférieures (8) sont partiellement revêtues par la couche maîtresse supérieure (9) partiellement transparente.

10. Procédé selon la revendication 1, **caractérisé en ce que** la surface maîtresse est vitrifiée avec une couche de protection transparente.

11. Procédé selon l'une ou plusieurs des revendications précédentes, **caractérisé en ce que** les données d'identité holographiques individuelles (3) sont constituées d'une photo de passeport.

12. Document d'identité ou de valeur avec un hologramme à volume réfléchissant appliqué dessus pour augmenter la sécurité anti-falsification, produit selon un procédé selon les revendications 1 à 11, dans lequel l'hologramme de volume est composé d'une couche de film photopolymère (13') qui est appliquée sur le document (17) et dans lequel toutes les informations holographiques (2, 4, 5, 6) de la couche, y compris des données d'identité holographiques individuelles intégrées pendant ou après l'application, comme par exemple une photo de passeport (3), se superposent et sont reconnaissables séparément et complètement sous différents angles d'observation et dans différentes couleurs.
